# EUROPEAN PATENT SPECIFICATION

(11) **EP 3 060 071 B1**
(45) Date of publication and mention of the grant of the patent: **10.04.2019**
(21) Application number: 14790763.8
(22) Date of filing: 06.10.2014
(51) Int. Cl.: A23L 7/20, A21D 2/38, A23L 5/42

(54) **METHODS FOR PREPARING DARK FOODSTUFF, PRODUCT OBTAINABLE THEREBY, AND USE THEREOF IN BREAD**
VERFAHREN ZUR HERSTELLUNG VON DUNKLEN LEBENSMITTELN, DADURCH ERHÄLTLICHES PRODUKT UND VERWENDUNG DAVON IN BROT
PROCÉDÉS DE PRÉPARATION DE PRODUITS ALIMENTAIRES DE COULEUR FONCÉE, PRODUIT POUVANT ÊTRE AINSI OBTENU, ET UTILISATION DE CE PRODUIT DANS LE PAIN

(30) Priority: 04.10.2013 NL 2011557
(43) Date of publication of application: 31.08.2016
(73) Proprietor: Borgesius Holding B.V., 9503 GA Stadskanaal (NL)
(72) Inventor: VAN DER MEULEN, Jan Foppe, NL-9503 GA Stadskanaal (NL)
(74) Representative: V.O.
(86) International application number: PCT/NL2014/050688
(87) International publication number: WO 2015/050454

(56) References cited:
- EP-A1- 0 372 243
- EP-A1- 0 458 023
- WO-A1-2006/128843
- DE-A1-102005 025 193
- GB-A- 408 467
- DATABASE WPI Week 201036 Thomson Scientific, London, GB; AN 2010-F55269 XP002728355, & CN 101 705 007 A (YANCHENG INST TECHNOLOGY) 12 May 2010 (2010-05-12)

## Description

The invention relates to the field of food technology. Among others, it relates to methods for preparing dark foodstuffs and use of the same to prepare dark coloured food items, in particular baked products such as dark brown bread, with improved health benefits.

The term 'brown bread' is usually taken to mean bread made of whole wheat grains. In other words, in the process of making brown bread, the bran and germ of the wheat flour are not removed and left intact. The result is that the bread retains all its essential nutrients, along with the healthy fiber. However, in many cases, the bread is made to look brown by adding dark colouring foodstuff, but in essence, it is not made from whole wheat and does not contain all the nutrients.

Known dark colouring agents include caramel colours (E150), cocoa, coffee, and colouring agents derived from roasted malt. Colouring agents derived from roasted malt have a strong colouring capacity, they can be prepared relatively easy and do not require any further additives.

For example, EP0372243 discloses a malted extract which is mixed with comminuted malt or extract thereof and heated to a temperature of 90 to 120°C until the mixture takes on a strong dark colouring. EP 0458023 teaches the preparation of a dark malt-based food colourant starting from a mixture of active malt, water and green malt or shoots of green malt. The mixture is subjected to consecutive heating periods of variable duration but increasing temperature. The final treatment consists of 16 hours at 112°C to 117°C resulting in a dark coloured malt extract. 120°C.

Thus, known malt-derived dark foodstuffs are prepared at relatively high temp (>100°C). This heat treatment causes production of undesirable by-products, in particular acrylamide. Acrylamide (C₃H₅NO or prop-2-enamide) can occur in starchy foods cooked at high temperatures including coffee, crisps, chips, bread and crisp breads. It is formed via the reaction of the amino acid asparagine and reducing sugars, both of which are naturally occurring in cereals. The reaction that occurs leads to the production of acrylamide, alongside colour-forming (browning) and flavour-producing compounds, and is known as the Maillard reaction.

In 2010, a joint Food and Agriculture Organization and World Health Organization expert committee determined there was evidence that acrylamide could cause cancer in laboratory animals. Even though there is no direct evidence acrylamide causes cancer in humans, FSANZ and food regulators agree that exposure should be minimized.

The European Food Safety Authority (EFSA) points to cereal-based products and fried potatoes as the main sources of acrylamide - not because the levels of acrylamide are particularly high in these products but rather to do with the high bread consumption.

Thus, there is a clear need for alternative dark-colouring foodstuffs. The present inventors aimed at providing an improved a malt-based foodstuff having reduced levels of toxic ingredients, in particular acrylamide, without compromising its strong colouring potency. A further goal was to provide a dark brown bread product having an acrylamide content below 30 µg/kg. A still further goal was to provide a brown bread which is free from added enzymes, in particular free from asparaginase and/or other hydrolyzing baking enzymes, which must be listed as ingredient under the appropriate E-number.

It was surprisingly observed that these goals could be met by subjecting a starting mixture comprising active malt, water and grains to at least 3 cycles of a defined heating protocol wherein the temperature is raised to only 90°C, and wherein fresh active malt is added in between each cycle. Despite the relatively low temperature regime, this process yields a very dark brown foodstuff while the production of undesirable (thermal) by-products is minimized.

Accordingly, the invention provides a method for preparing a dark foodstuff, comprising
- providing a starting mixture comprising active malt, water and grains or a milling fraction thereof
- subjecting the starting mixture to at least 3 heating cycles, each heating cycle comprising the steps of
   a) heating at a temperature of about 60°C for at least 16 hours, followed by
   b) heating at a temperature of about 70°C for at least 16 hours, followed by
   c) heating at a temperature of about 80°C for at least 16 hours, followed by
   d) heating at a temperature of about 90°C for at least 16 hours, followed by
   e) cooling to a temperature below about 10°C and maintaining said temperature for at least 10 hours
- wherein additional active malt is added to the mixture in between each heating cycle.

Heating of the starting mixture comprising water, grains and active malt activates two types of enzymes. The active malt comprises α-amylase which randomly cleaves the long starch molecules in the grains to increase the level of reducing sugars. The β-amylase naturally present in the grains is an exoenzyme and acts on the reducing ends of the digested starch to produce maltose. Maltose contributes to the formation of a brown color via the Maillard reaction, also referred to as non-enzymatic browning. Among the various reaction products are insoluble brown pigmented products, 'melanoidins', which have variable structures, molecular weights and nitrogen content

Thus, the step-wise heating protocol in a method of the invention ensures that the starch present in the grains is adequately converted to reducing sugars, which facilitate the browning reaction, while the temperature is kept moderate to avoid the formation of undesirable by-products, in particular acrylamide. Heating up to 90°C and cooling to below 10°C, e.g. about 5°C, are important to ensure that the dark foodstuff suspension obtained can be stored and preserved until further use.

The exact duration of each heating and/or cooling step can be readily adjusted to fit within an economically feasible process. For example, one or more of steps a) through e) may be carried out for up to 48 hours, preferably up to 30 hours. Whereas satisfactory results were obtained when the heating protocol was repeated three times, an even darker coloured foodstuff was obtained wherein the method comprises 4 heating cycles. Five or more cycles were not found to add to the colouring intensity.

The cooling to a temperature below about 10°C can be performed in various ways. In one embodiment, the heated mixture is rapidly cooled, e.g. within several hours, to below 10C°. In another embodiment, it involves a stepwise cooling to an intermediate temperature, e.g. in the range of 50-70°C over a time period of several hours, followed by a second cooling step to below about 5C°. Good results were obtained with a first cooling period to about 60°C during 24 hours, and a subsequent cooling period to about 5C° during 24 hours.

A method of the invention uses as starting material a mixture of water, grains and active malt. As used herein, the term "active malt" refers to any malt composition or malt extract comprising alpha-amylase. For example, it comprises diastatic malt, malt treated with amylase, or a mixture thereof. Active malt can be obtained from various grains. Barley is the most commonly malted grain, in part because of its high diastatic power or enzyme content, though wheat, rye, oats and rice are also used. Preferably, a starting mixture for use in the present invention comprises active malt derived from malted barley.

Good results were obtained when the starting mixture comprises active malt in an amount of 1.8-2.2 % by weight based on the total weight of the grains. Amounts below 1.8% can be used in combination with prolonged incubation times, e.g. at least 20 hours, for one or more steps. Amounts above 2.2% were not found to increase the browning.

A method of the invention is further characterized in that additional active malt is added in between each heating cycle. In one embodiment, the additional active malt is added in an amount of 90-150 % of the amount added used in the preceding heating cycle. More specifically, it was found that very good results were obtained when a gradually increasing amount of active malt was added at each step. In a preferred embodiment, the additional active malt is added in an amount of 110-150 % of the amount added used in the preceding heating cycle.

Typically, a starting mixture comprises water in an amount of 2-3 liter per kg weight of grains. The mixture may contain further cereal-based ingredients. In a preferred embodiment, the starting mixture comprises a milling fraction of a grain. The term "milling fraction", in the content of the present invention, refers to all or part of the fractions resulting from mechanical reduction of the size of grains, through, as examples but not limited to, cutting, rolling, crushing, breakage or milling, with or without fractionation, through, as examples but not limited to, sieving, screening, sifting, blowing, aspirating, centrifugal sifting, windsifting, electrostatic separation, or electric field separation. Exemplary milling fractions include bran and endosperm flour. The use of a milling fraction in preparing a colouring foodstuff of the invention contributes to a more homogeneous distribution of the dark colour in the final food item. For instance, particles in the range of about 200-300, like 250 µm, are particularly suitable to prepare a dark foodstuff for use in the manufacture of a homogeneously colored dark brown bread.

The term "bran" in the context of the present invention, means a milling fraction from a grain enriched in any or all of the tissues to be selected from aleurone, pericarp, sepals, petals and seed coat, as compared to the corresponding intact grain. The bran used in this invention can also be extruded or pelletised, followed by milling or another form of physical homogenisation . The term "endosperm flour" refers in the context of the present invention, to a powder obtained by milling cereal grain after removal of part or all of the bran and germ fractions and thus contains in majority the endosperm fraction of the grain. Endosperm flour typically has a mineral content (ash content) between 0.3% and 1.4% (w/w on DM), as determined by weighing the ash mass that remains after a sample is incinerated in an oven at temperatures typically between 55°C and 90°C.

In a specific embodiment, (wheat) bran is finely ground to particles less than about 2 µm, after which it is subjected to a windsifting procedure to obtain a heavy fraction that is enriched in starch. This fraction, also referred to as "starch-enriched (wheat) bran flour" is advantageously used in a starting mixture of the present invention. For example, starch-enriched wheat bran flour" is combined with wheat bran, preferably bran that is finely ground to particles less than about 2 µm.

The addition of shredded wheat, broken wheat, wheat bran or any fraction or combination thereof was found to have advantageous effects on the consistency of the final coloring foodstuff. In one preferred embodiment, a mixture of shredded wheat and wheat bran is used, for example in a 2:1 to 1:2 (w/w) ratio, to prepare a dark coloured foodstuff.

The invention also provides a dark foodstuff obtainable by a method according to the invention. Such foodstuff is characterized among others by a very low acrylamide content combined with a deep brown colour and/or a high dietary fiber content, preferably at least 20%. In one embodiment, the acrylamide content is less then 30 µg/kg (dry matter). Total dietary fiber typically ranges between 25 and 40%, like about 30-35%. Soluble dietary fiber typically ranges between 3 and 10%, like about 4-7%. Insoluble dietary fiber typically ranges between 20 and 40%, like about 25-35%. These percentages refer to w/w on DM.

A further embodiment relates to the use of a dark foodstuff according to the invention as a colouring additive in a food item, preferably a baked food item, like a brown bread. Also provided is a food item comprising a dark coloured foodstuff of the invention and methods for producing them.

WO2006/128843 and DE 10 2005 025193 also relate to reducing acrylamide levels in colored foodstuffs. WO2006/128843 used asparaginase and a further hydrolyzing enzyme to enzymatically reduce the formation of acrylamide. DE 10 2005 025193 teaches that use of the natural sugar erythrulose for the manufacture of a foodstuff, which undergoes browning when heated, and wherein erythrulose contributes to the browning. WO2006/128843 and DE 10 2005 025193 therefore do not relate to malt-based food colorants. Furthermore, when used in bread the colorants of WO2006/128843 and DE 10 2005 025193 only contribute to the browning of the bread crust. In contrast, a dark foodstuff of the present invention provides a brown colour throughout the bread, i.e. not only the crust but also the interior.

Malt-based food colorants as such are known in the art. See for example, EP 0458023 EP 0372243 or GB 408 467. However, these are prepared by a different process, involving higher temperatures, different reaction times, reaction cycles and reaction ingredients, thus inherently also leading to technically different products.

In particular, the invention provides a method for making a bread product, comprising admixing a dark foodstuff according to the invention with yeast, flour, preferably wholegrain flour, water and optionally other bakery ingredients to form a dough and further processing the dough to obtain a baked or pre-baked brown coloured bread product. The term "flour" refers in the context of the present invention to a dry powder-like product produced by milling of cereal grains or grain fractions. The term "wholegrain flour", in the context of the present invention, refers to a powder obtained by milling of cereal grain with or without removal of the sepals and petals, with or without removal of part of the outer pericarp layer, and with or without removal of the germ. The word "whole" refers to the fact that all of the grain (bran, germ, and endosperm) is used and nothing is lost in the process of making the flour. This is in contrast to white, refined flours, which contain only the endosperm. Because the whole flour contains the remains of all of the grain, it has a textured, brownish appearance. Wholegrain flour typically has a mineral content (ash content) higher than 1.4% (w/w on DM), as determined by weighing the ash mass that remains after a sample is incinerated in an oven. The dough may comprise a further source of dietary fibers. Furthermore, gluten may be added to provide stability. In a preferred embodiment, gluten is present in an amount of about 10-20 % by weight. For example, about 12 grams of gluten is added per kg of the other dry components of the starting mixture.

Further additives, preferably from a natural source, can be added to improve one or more properties of a bread. For example, one or more vegetable oil(s) can contribute to the structure and softness. Examples thereof are soybean oil, sunflower oil, safflower oil, maize oil, coconut oil, peanut oil and palm oil. In one embodiment, it is a non-hydrogenated vegetable oil, preferably selected from the group consisting of canola oil, coconut oil, corn oil, cottonseed oil, flaxseed oil, palm oil, palm kernel oil, peanut oil, safflower oil, sesame oil, soybean oil, and sunflower oil. Coconut oil is particularly preferred.

Sweeteners can be added to improve the taste and browning of the crust. Preferred sweeteners include unrefined sugars, e.g. those comprised in natural honey, agave syrup or brown rice syrup.

As will be appreciated by a person skilled in the art, the present invention allows for the manufacture of a bread product using essentially only ingredients of natural origin. It does not require the addition of emulsifiers, exogenous food grade enzymes and the like. In fact, a bread of the invention can be prepared from a simple mixture of flour, water, baker's yeast and salt, without the use of additives that must be listed as "E-number".

Also provided is a bread product obtainable by a method according to the invention. In a preferred embodiment, the bread product is a whole-wheat bread, i.e. a type of bread made using flour that is partly or entirely milled from whole or almost-whole wheat grains. Synonyms or near-synonyms for whole-wheat bread elsewhere in the world (such as for example in the UK) are whole-grain bread or wholemeal bread. A whole-wheat bread may be coated with whole or cracked grains of wheat, though this is mostly decorative compared to the nutritional value of a good quality loaf itself. The exact composition of whole-wheat bread varies from country to country and even within one country. In some cases, the bread is made with whole-grain flour that contains all of the component parts of the grain in the same ratios as they occur in nature, whereas in other cases the bread may include only representative amounts of bran or wheat germ.

A bread of the invention is characterized among others by a very low acrylamide content. It typically has a polyacrylamide content of less than 30 µg/kg, and is characterized by an attractive, deep brown color.

Importantly, a bread of the invention is not produced via enzymatically decreasing the formation of acrylamide, for example by using asparaginase as disclosed in WO2006/128843. Hence, a bread according to the invention is essentially free of asparaginase and/or other hydrolyzing baking enzymes such as those known in the art as Bakezyme HSP6000, Bakezyme A10000, Bakezyme GOX 10,000, Bakezyme MA 10,000, Bakezyme BXP501, Bakezyme W, Bakezyme XE, Pectinex and Lipopan F. In one embodiment, a bread of the invention is essentially free of amylase, xylanase and lipase. In a specific aspect, a bread contains less than 50 ppm (*A. niger*) asparaginase, and/or less than 50 ppm other hydrolyzing enzyme.

A bread provided herein neither contains significant amounts of erythrulose or a heat-induced reaction products thereof which contributes to browning, as described in DE 10 2005 025193. Preferably, it contains less than about 0.1%, more preferably less than about 0.01 wt% erythrulose based on the total weight of the bread. The erythrulose content can be determined by HPLC, for example as taught by Vasic-Racki et al. (2003) Bioprocess Biosyst. Eng. 25, 285-290.

The color, i.e. the degree of browning, of a bread can be defined according to the CIELAB scale by measuring a sample obtained from the bread. For example, the bread has a CIELAB L* value below 40, preferably below 35, more preferably below 30, combined with a CIELAB a* value in the range of about 7.5-9.0, preferably 8.0-9.0 and/or a CIELAB b* value of at least 14, preferably at least 15, more preferably at least 16. Typically, the b* value of a bread provided herein is in the range of 15-20.
A bread product of the invention is furthermore characterized by a high dietary fiber content. Total dietary fiber typically ranges between 6 and 12%, like about 7-11%. Soluble dietary fiber typically ranges between 4 and 9%, like about 5-7.5%. Insoluble dietary fiber typically ranges between 1 and 3%, like about 1.2-2.8%. These percentages refer to w/w based on DM. In one aspect, the invention provides a bread product having one or more of the following features:
(i) a degree of browning defined by a CIELAB L* value below 40, preferably below 35, more preferably below 30, combined with a CIELAB a* value in the range of about 7.5-9.0, preferably 8.0-9.0 and/or a CIELAB b* value of at least 14, preferably at least 15, more preferably at least 16;
(ii) an acrylamide content of less than 30 µg/kg;
(iii) a total dietary fiber content of at least 6%, preferably 7-12%, a soluble dietary fiber content between 4 and 9% and/or an insoluble dietary fiber content between 1 and 3% (w/w on dry matter), wherein the bread product preferably comprises less than 0.01 wt% erythrulose based on the total weight of the bread and comprising less than 50 ppmof asparaginase and/or less than 50 ppm of other hydrolyzing baking enzymes.

For example, the bread product has (i) a degree of browning defined by a CIELAB L* value below 35, combined with a CIELAB a* value in the range of 7.5-9.0 and a CIELAB b* value of at least 15; (ii) an acrylamide content of less than 30 µg/kg; (iii) a total dietary fiber content between 7-11%, a soluble dietary fiber content between 4 and 9% and an insoluble dietary fiber content between 1 and 3% (w/w on dry matter).

### EXPERIMENTAL SECTION

### Example 1: Preparation of exemplary dark foodstuffs

A mixture of 30 kilograms wheat fibers, 100 kilograms water (20°C) and 1500 grams of active malt comprising alpha-amylase was heated to a temperature of 60°C to initiate a first heating cycle. Each heating cycle consists of 24 hours incubation at 60°C, followed by a 24 hour incubation at 70°C, followed by a 24 hour incubation at 80°C, followed by a 24 hour incubation at 90°C, followed by cooling the resulting reaction mixture to about 5°C and allowing the mixture to rest for 24 hours. Prior to initiating a second heating cycle, 1500 grams of fresh active malt was added. This process was repeated four times to result in a dark coloured foodstuff, herein also referred to as "wheat malt color".

Analysis of the wheat malt color thus prepared revealed that it contained no detectable (<30 µg/kg) acrylamide. The dietary fiber content was as follows:

| | wheat malt color 28.5%ds | wheat malt color |
|---|---|---|
| Soluble dietary fiber (AOAC) [S] | 1.3% | 4.56% |
| Insoluble dietary fiber (AOAC) [S] | 8.0% | 28.0% |
| Total dietary fiber (AOAC) [S] | 9.3% | 32.63% |
| Acrylamide [S] | not detectable | |
| (Q - DAkkS D-PL-14602-01-00) | | |
| [S] = Subcontracted. | | |

A second dark exemplary foodstuff was prepared according to the above heating protocol using as starting mixture a combination of the following ingredients:
25 kg,commercial flour Zeemeeuw (Meneba, Rotterdam, The Netherlands), which is a starch-enriched fraction of whole wheat flour obtained bywindsifting, having a protein content of about 8.5wt%
20 kg finely ground (< 2µm) wheat bran (Micro wheat bran)
120 liter water,
1500 gram diastatic malt (Ireks).

After the last heating cycle, the mixture was cooled to 60°C during a 24 hour time period, followed by cooling to 5C° during a 24 hour time period.

### Example 2: Use of a dark foodstuff in preparing brown bread

This Example describes the preparation of dark coloured brown bread using either the first wheat malt color prepared in Example 1 (bread numbers 1, 3, 5 and 7) or the conventional malt-derived coloring agent prepared by heating malt to above 100°C. Different amounts of wheat malt color were used, ranging from 400 to 2800 grams per 3000 grams of whole grain flour. Reference control bread#0 contained no color agent.

**Table 1: Ingredients of the doughs to prepare the different brown breads. Asterisks indicate the breads according to the invention.**

| Bread | Flour (gr) | Whole meal | Water (gr) | Salt (gr) | Bread improver¹ | Gluten | Wheat malt color² | st.d.m.gr.³ | Yeast (gr) |
|---|---|---|---|---|---|---|---|---|---|
| 0 | | 3000 | 1700 | 45 | 90 | 0 | 0 | 0 | 60 |
| 1* | | 3000 | 1500 | 45 | 90 | 35 | 400 | 0 | 70 |
| 2 | 3000 | | 1700 | 45 | | 45 | 0 | 200 | 60 |
| 3* | | 3000 | 1200 | 45 | 90 | 120 | 1000 | 0 | 80 |
| 4 | 3000 | | 1700 | 45 | | 20 | 0 | 400 | 60 |
| 5* | | 3000 | 1000 | 45 | 90 | 180 | 2000 | 0 | 100 |
| 6 | 3000 | | 1700 | 45 | | 20 | 0 | 600 | 60 |
| 7* | | 3000 | 900 | 45 | 90 | 250 | 2800 | 0 | 120 |

| | | | | | | | | | |
|---|---|---|---|---|---|---|---|---|---|
| ¹Bread improver for whole wheat bread obtained from Sonneveld Group BV, Papendrecht, The Netherlands. It contains vegetable fat, dextrose, wheat gluten, emulsifiers, food grade enzymes and ascorbic acid. ² Wheat malt color (dark foodstuff of the invention) prepared according to Example 1. ³ Bread improver for dark brown bread marketed under the name "Stevig donker meergranen" obtained from Puratos, Groot Bijgaarden, Belgium. It contains malt, sunflower seeds, wheat gluten, lupine, flour, linseed, millet, bran, maize groats, dextrose, sesame seed, emulsifiers and ascorbic acid. | | | | | | | | | |

Doughs were prepared by mixing the ingredients and kneading the resulting mixture (4 minutes low speed; 5 minutes high speed). The dough was weighed into 900 gram portions. The temperature of the dough was 27°C. A first rising period of 45 minutes was followed by a second rising period of 70 minutes at 31°C and a relative humidity of 85%. The risen dough was baked in an oven at 230°C for 35 min.

### Example 3: Characterization of brown bread

The breads prepared in Example 2 were characterized with respect to the acrylamide content, the dietary fiber content and the color.
- Acrylamide content was analyzed using tandem mass spectrometry according to Hoenicke et al. (Anal. Chim. Acta 520 (2004) 207-215).
- Dietary fiber (total, soluble and insoluble) was determined by an enzymatic-gravimetric method, MES-TRIS buffer, according to the established AOAC Official Methods 991.43 (AOAC Official Methods of Analysis (1995), Cereal Foods, Chapter 32, pp. 7-9).
- The color was quantitatively determined using the CIELAB scale. CIE L*a*b* (CIELAB) is the most complete color space specified by the International Commission on Illumination. It describes all the colors visible to the human eye and was created to serve as a device-independent model to be used as a reference. The three coordinates of CIELAB represent the lightness of the color (L* = 0 yields black and L* = 100 indicates diffuse white), its position between red/magenta and green (a*, negative values indicate green while positive values indicate magenta) and its position between yellow and blue (b*, negative values indicate blue and positive values indicate yellow).

The bread was cut in halves with a toothed knife and the test was conducted with a sample from the inner part (inside of the bread). Conditions for Minolta equipment were: ILLUMINANT D65 OBSERVER 10°.

**Table 2: Properties of the brown breads produced using different color agents.**

| Bread# | Acrylamide (µg/kg) | Soluble dietary fiber (%) | Insoluble dietary fiber (%) | Total dietary fiber (%) | CIELAB L* value | CIELAB a* value | CIELAB b* value |
|---|---|---|---|---|---|---|---|
| 0 | ND¹ | 4.8 | 1.1 | 5.9 | 46.01 | 8.45 | 21.38 |
| 1 | ND¹ | 4.9 | 1.1 | 6.0 | 47.03 | 7.99 | 19.99 |
| 2 | 34 | 5.3 | 1.4 | 6.6 | 32.00 | 7.89 | 15.60 |
| 3 | ND¹ | 6.2 | 1.2 | 7.4 | 36.64 | 8.68 | 18.87 |
| 4 | 39 | 5.2 | 1.2 | 6.4 | 28.70 | 7.45 | 12.84 |
| 5 | ND¹ | 6.8 | 1.6 | 8.4 | 29.05 | 8.81 | 17.69 |
| 6 | 49 | 5.0 | 1.2 | 6.2 | 21.72 | 6.38 | 11.00 |
| 7 | ND¹ | 7.3 | 2.6 | 9.9 | 26.06 | 8.68 | 16.39 |

| | | | | | | | |
|---|---|---|---|---|---|---|---|
| ¹ Not detectable; below the detection limit of 30 µg/kg | | | | | | | |

The results summarized in Table 2 lead to the following conclusions:
1) The darkness of a bread produced with a wheat malt color reaches a level that is comparable to a conventional brown bread. Interestingly, the significantly higher b* value of bread#6 as compared to bread#7 shows that bread#6 of the invention has a more intense brown color than bread#7, which had a more greyish appearance.
2) A bread produced using a wheat malt color of the invention contains no detectable acrylamide. In contrast, the acrylamide content of a conventional bread comprising a known bread coloring agent increases with increasing dosage / browning of the bread to a value of nearly 50 µg/kg.
3) The total dietary fiber content of a bread produced with a wheat malt color increases up to 9.9%.

Taken together, a dark foodstuff of the invention allows for the production of a brown bread having an attractive dark brown appearance while avoiding an increase in harmful acrylamide. Furthermore, high levels of beneficial dietary fibers can be obtained. A bread product of the invention therefore has improved health benefits as compared to currently known (whole wheat) breads.

## Claims

1. A method for preparing a dark foodstuff, comprising
- providing a starting mixture comprising active malt, water and grains or a milling fraction thereof;
- subjecting the starting mixture to at least 3 heating cycles, each heating cycle comprising the steps of
a) heating at a temperature of about 60°C for at least 16 hours, followed by
b) heating at a temperature of about 70°C for at least 16 hours, followed by
c) heating at a temperature of about 80°C for at least 16 hours, followed by
d) heating at a temperature of about 90°C for at least 16 hours, followed by
e) cooling to a temperature below 10°C and maintaining said temperature for at least 10 hours; and
- wherein additional active malt is added to the mixture in between each heating cycle.

2. Method according to claim 1, wherein one or more of steps a) through e) is carried out for up to 48 hours, preferably up to 30 hours.

3. Method according to claim 1 or 2, wherein 4 heating cycles are performed.

4. Method according to any one of the preceding claims, wherein active malt comprises diastatic malt or malt treated with amylase.

5. Method according to claim 4, wherein active malt is derived from malted barley.

6. Method according to any one of the preceding claims, wherein the starting mixture comprises active malt in an amount of 1.8-2.2 % by weight based on the total weight of the grains or milling fraction thereof.

7. Method according to any one of the preceding claims, wherein the additional active malt is added in an amount of 100-150 % of the amount added used in the preceding heating cycle.

8. Method according to any one of the preceding claims, wherein starting mixture comprises water in an amount of 2-3 liter per kg weight of grains.

9. Method according to any one of the preceding claims, wherein starting mixture comprises wheat, shredded wheat, broken wheat, wheat bran or any combination thereof.

10. Dark foodstuff obtainable by a method according to any one of claims 1-9.

11. Use of a dark foodstuff according to claim 10 as a colouring additive in a food item, preferably a baked food item, more preferably a bread.

12. A method for making a bread product, comprising admixing a dark foodstuff according to claim 10 with yeast, flour, water and optionally other bakery ingredients to form a dough and further processing the dough to obtain a baked or pre-baked brown coloured bread product.

13. Method according to claim 12, wherein the dough further comprises gluten.

14. Method according to claim 12 or 13, wherein processing the dough comprises allowing the dough to rise twice, and baking the risen dough at a temperature of 220-240°C.

15. A bread product obtainable by a method according to any one of claims 12-14.

16. A bread product according to claim 15, having the following features:
(i) a degree of browning defined by a CIELAB L* value below 40, preferably below 35, more preferably below 30, combined with a CIELAB a* value in the range of 7.5-9.0, preferably 8.0-9.0 and/or a CIELAB b* value of at least 14, preferably at least 15, more preferably at least 16;
(ii) an acrylamide content of less than 30 µg/kg;
(iii) a total dietary fiber content of at least 6%, preferably 7-12%, a soluble dietary fiber content between 4 and 9% and/or an insoluble dietary fiber content between 1 and 3% (w/w on dry matter);
(iv) comprising less than 0.01 wt% erythrulose based on the total weight of the bread; and
(v) comprising less than 50 ppm asparaginase and/or less than 50 ppm other hydrolyzing baking enzymes.

17. Bread product according to claim 16, having
(i) a degree of browning defined by a CIELAB L* value below 35, combined with a CIELAB a* value in the range of 7.5-9.0 and a CIELAB b* value of at least 15;
(ii) a total dietary fiber content between 7-11%, a soluble dietary fiber content between 4 and 9% and an insoluble dietary fiber content between 1 and 3% (w/w on dry matter).

## Patentansprüche

1. Verfahren zur Herstellung eines dunklen Lebensmittels, umfassend
- Bereitstellen einer Ausgangsmischung, umfassend aktives Malz, Wasser und Körner oder eine Mahlfraktion davon;
- Unterziehen der Ausgangsmischung mindestens 3 Erhitzungszyklen, wobei jeder Erhitzungszyklus umfassend die Schritte von:
a) Erhitzen bei einer Temperatur von etwa 60 °C für mindestens 16 Stunden, gefolgt von
b) Erhitzen bei einer Temperatur von etwa 70 °C für mindestens 16 Stunden, gefolgt von
c) Erhitzen bei einer Temperatur von etwa 80 °C für mindestens 16 Stunden, gefolgt von
d) Erhitzen bei einer Temperatur von etwa 90 °C für mindestens 16 Stunden, gefolgt von
e) Abkühlen auf eine Temperatur unter 10 °C und Halten der Temperatur für mindestens 10 Stunden; und
- wobei der Mischung zwischen jedem Erhitzungszyklus zusätzliches aktives Malz hinzugefügt wird.

2. Verfahren nach Anspruch 1, wobei einer oder mehrere der Schritte a) bis e) bis zu 48 Stunden, vorzugsweise bis zu 30 Stunden durchgeführt werden.

3. Verfahren nach Anspruch 1 oder 2, wobei dem 4 Erhitzungszyklen ausgeführt werden.

4. Verfahren nach einem der vorhergehenden Ansprüche, wobei aktives Malz diastatisches Malz oder mit Amylase behandeltes Malz umfasst.

5. Verfahren nach Anspruch 4, wobei aktives Malz aus gemälzter Gerste stammt.

6. Verfahren nach einem der vorhergehenden Ansprüche, wobei die Ausgangsmischung aktives Malz in einer Menge von 1,8 bis 2,2 Gew.-%, basierend auf dem Gesamtgewicht der Körner oder der Mahlfraktion davon, umfasst.

7. Verfahren nach einem der vorangehenden Ansprüche, wobei das zusätzliche aktive Malz in einer Menge von 100 bis 150 % der im vorhergehenden Erhitzungszyklus verwendeten Zugabemenge zugegeben wird.

8. Verfahren nach einem der vorhergehenden Ansprüche, wobei die Ausgangsmischung Wasser in einer Menge von 2 bis 3 Liter pro kg Gewicht an Körnern umfasst.

9. Verfahren nach einem der vorhergehenden Ansprüche, wobei die Ausgangsmischung Weizen, geschredderten Weizen, gebrochenen Weizen, Weizenkleie oder irgendeine Kombination davon umfasst.

10. Dunkles Lebensmittel, erhältlich durch ein Verfahren nach einem der Ansprüche 1 bis 9.

11. Verwendung eines dunklen Lebensmittels nach Anspruch 10 als Farbzusatz in einem Lebensmittelartikel, vorzugsweise einem gebackenen Lebensmittelartikel, bevorzugter einem Brot.

12. Verfahren zur Herstellung eines Brotprodukts, umfassend das Vermischen eines dunklen Lebensmittels nach Anspruch 10 mit Hefe, Mehl, Wasser und optional anderen Backzutaten, um einen Teig zu bilden, und den Teig weiter zu verarbeiten, um ein gebackenes oder vorgebackenes braun gefärbtes Brotprodukt zu erhalten.

13. Verfahren nach Anspruch 12, wobei der Teig weiter Gluten umfasst.

14. Verfahren nach Anspruch 12 oder 13, wobei das Verarbeiten des Teigs das zweimalige Aufgehen des Teiges und das Backen des aufgegangenen Teiges bei einer Temperatur von 220 bis 240 °C umfasst.

15. Brotprodukt, erhältlich durch ein Verfahren nach einem der Ansprüche 12 bis 14.

16. Brotprodukt nach Anspruch 15 mit den folgenden Eigenschaften:
(i) einem Bräunungsgrad, definiert durch einen CIELAB-L*-Wert unter 40, vorzugsweise unter 35, bevorzugter unter 30, kombiniert mit einem CIELAB-a*-Wert im Bereich von 7,5 bis 9,0, vorzugsweise 8,0 bis 9,0 und/oder einem CIELAB-b*-Wert von mindestens 14, vorzugsweise mindestens 15, bevorzugter mindestens 16;
(ii) einem Acrylamidgehalt von weniger als 30 µg/kg;
(iii) einem Gesamtgehalt an Ballaststoffen von mindestens 6 %, vorzugsweise 7 bis 12 %, einen Gehalt an löslichen Ballaststoffen zwischen 4 und 9% und/oder einen
Gehalt an unlöslichen Ballaststoffen zwischen 1 und 3 % (Gew./Gew. auf Trockensubstanz);
(iv) umfassend weniger als 0,01 Gew.-% Erythrulose, basierend auf dem Gesamtgewicht des Brotes; und
(v) umfassend weniger als 50 ppm Asparaginase und/oder weniger als 50 ppm anderer hydrolysierenden Backenzyme.

17. Brotprodukt nach Anspruch 16, mit
(i) einem Bräunungsgrad, definiert durch einen CIELAB-L*-Wert unter 35, kombiniert mit einem CIELAB-a*-Wert im Bereich von 7,5 bis 9,0 und einem CIELAB-b*-Wert von mindestens 15;
(ii) einen Gesamtgehalt an Ballaststoffen zwischen 7 und 11 %, einen Gehalt an löslichen Ballaststoffen zwischen 4 und 9 % und einen Gehalt an unlöslichen Ballaststoffen zwischen 1 und 3 % (Gew./Gew. auf Trockensubstanz).

## Revendications

1. Un procédé de préparation d'un aliment sombre, comprenant les étapes consistant à :
- fournir un mélange de départ comprenant du malt actif, de l'eau et des grains ou une fraction provenant de mouture de ce mélange
- soumettre le mélange de départ à au moins 3 cycles de chauffage, chaque cycle de chauffage comprenant les étapes consistant à
a) un chauffage à une température d'environ 60°C pendant au moins 16 heures, ce que l'on fait suivre
b) d'un chauffage à une température d'environ 70°C pendant au moins 16 heures, ce que l'on fait suivre
c) d'un chauffage à une température d'environ 80°C pendant au moins 16 heures, ce que l'on fait suivre
d) d'un chauffage à une température d'environ 90°C pendant au moins 16 heures, ce que l'on fait suivre
e) d'un refroidissement à température inférieure à 10°C et maintien de ladite température pendant au moins 10 heures ; et
procédé dans lequel est ajouté au mélange, entre chaque cycle de chauffage une quantité supplémentaire de malt actif.

2. Procédé selon la revendication 1, dans lequel une ou plusieurs des étapes a) à e) peuvent atteindre jusqu'à 48 heures, de préférence jusqu'à 30 heures.

3. Procédé selon la revendication 1 ou 2, dans lequel on effectue 4 cycles de chauffage.

4. Procédé selon l'une quelconque des revendications précédentes, dans lequel le malt actif comprend un malt diastatique ou un malt traité par de l'amylase.

5. Procédé selon la revendication 4, dans lequel le malt actif est dérivé d'orge maltée.

6. Procédé selon l'une quelconque des revendications précédentes, dans lequel le mélange de départ comprend du malt actif en une quantité de 1,8 à 2,2% en poids sur la base du poids total des grains ou de leur fraction résultant d'un broyage.

7. Procédé selon l'une quelconque des revendications précédentes, dans lequel le malt actif supplémentaire est ajouté en une quantité de 100 à 150% de la quantité ajoutée utilisée dans le cycle de chauffage précédent.

8. Procédé selon l'une quelconque des revendications précédentes, dans lequel le mélange de départ comprend de l'eau en une quantité de 2 à 3 litres par kg de poids de grains.

9. Procédé selon l'une quelconque des revendications précédentes, dans lequel le mélange de départ comprend du blé, du blé déchiqueté, du blé cassé, du son de blé ou toute combinaison de ceux-ci.

10. Aliment sombre pouvant être obtenu par un procédé selon l'une quelconque des revendications 1 à 9.

11. Utilisation d'un aliment sombre selon la revendication 10 en tant qu'additif colorant dans un produit alimentaire, de préférence un produit alimentaire cuit au four, plus préférablement un pain.

12. Procédé de fabrication d'un produit panifié, comprenant l'étape consistant à mélanger un aliment sombre selon la revendication 10 avec de la levure, de la farine, de l'eau et éventuellement d'autres ingrédients de boulangerie pour former une pâte et à poursuivre le traitement de la pâte pour obtenir un produit panifié cuit ou précuit de couleur brune.

13. Procédé selon la revendication 12, dans lequel la pâte comprend en outre du gluten.

14. Procédé selon la revendication 12 ou 13, dans lequel le traitement de la pâte comprend l'étape consistant à laisser lever la pâte à deux reprises et à cuire la pâte levée à une température de 220-240°C.

15. Un produit de panification pouvant être obtenu par un procédé selon l'une quelconque des revendications 12 à 14.

16. Un produit de panification selon la revendication 15 présentant les caractéristiques suivantes :
(i) un degré de brunissement défini par une valeur CIELAB L* inférieure à 40, de préférence inférieure à 35, mieux encore inférieure à 30, combinée à une valeur CIELAB a* comprise dans la gamme de 7,5 à 9,0, de préférence 8,0 à 9,0 et/ou à une valeur CIELAB b* d'au moins 14, de préférence d'au moins 15, de manière davantage préférée d'au moins 16;
(ii) une teneur en acrylamide inférieure à 30µg/kg,
(iii) une teneur totale en fibres alimentaires d'au moins 6%, de préférence de 7-12%, une teneur en fibres alimentaires solubles comprise entre 4 et 9% et/ou une teneur en fibres alimentaires insolubles comprise entre 1 et 3% (poids/poids de matière à sec).
(iv) comprenant moins de 0,01% en poids d'érythrulose exprimée par rapport au poids du pain ;
(v) comprenant moins de 50ppm d'asparaginase et/ou moins de 50ppm d'autres enzymes de cuisson hydrolysantes.

17. Produit de panification selon la revendication 16, présentant (
i) un degré de brunissage défini par une valeur CIELAB L* inférieure à 35, combinée à une valeur CIELAB a* dans la gamme de 7,5 à 9,0 et à une valeur CIELAB b* d'au moins 15 ;
(ii) une teneur totale en fibres alimentaires comprise entre 7 et 11%, une teneur en fibres alimentaires solubles comprise entre 4 et 9% et une teneur en fibres alimentaires insolubles comprise entre 1 et 3% (poids/poids de matière sèche).
